# EUROPEAN PATENT APPLICATION

(11) **EP 4 556 685 A1**
(43) Date of publication of application: **21.05.2025**
(21) Application number: 24213111.8
(22) Date of filing: 14.11.2024
(51) Int. Cl.: F01D 11/12

(54) **MULTI-MATERIAL ABRADABLE SHROUD FOR GAS TURBINE ENGINE ROTOR**

(30) Priority: 14.11.2023 US 202318389469
(71) Applicant: PRATT & WHITNEY CANADA CORP., Longueuil, Québec J4G 1A1 (CA)
(72) Inventor: BARNETT, Barry, (01BE5) Longueuil, J4G 1A1 (CA)
(74) Representative: Dehns

(57) **Abstract**

An apparatus is provided for a gas turbine engine. This apparatus includes a shroud (24), and the shroud (24) includes a base (62) and an abradable coating system (64). The base (62) extends axially along and circumferentially about an axis (28). The base (62) extends radially between a base inner side (70) and a base outer side (72). The abradable coating system (64) is bonded to and covers the base (62) at the base inner side (70). The abradable coating system (64) includes a plurality of protrusions (74) and an elastomeric material (76). The protrusions (74) are arranged circumferentially about the axis (28) in a circumferentially extending array (78). Each of the protrusions (74) projects in a radial inward direction away from the base inner side (70) to a distal inner end (86). Each of the protrusions (74) is configured from or otherwise includes an abradable material. The elastomeric material (76) fills a gap (80) between each circumferentially neighboring pair of the protrusions (74).

## Description

### TECHNICAL FIELD

This disclosure relates generally to a gas turbine engine and, more particularly, to an abradable shroud for the gas turbine engine.

### BACKGROUND INFORMATION

A gas turbine engine may include an abradable shroud housing a bladed rotor. Various types and configurations of abradable shrouds are known in the art. While these known abradable shrouds have various benefits, there is still room in the art for improvement.

### SUMMARY

According to an aspect of the present invention, an apparatus is provided for a gas turbine engine. This apparatus includes a shroud, and the shroud includes a base and an abradable coating system. The base extends axially along and circumferentially about an axis. The base extends radially between a base inner side and a base outer side. The abradable coating system is bonded to and covers the base at the base inner side. The abradable coating system includes a plurality of protrusions and an elastomeric material. The protrusions are arranged circumferentially about the axis in a circumferentially extending array. Each of the protrusions projects in a radial inward direction away from the base inner side to a distal inner end. Each of the protrusions is configured from or otherwise includes an abradable material. The elastomeric material fills a gap between each circumferentially neighboring pair of the protrusions.

According to another aspect of the present invention, another apparatus is provided for a gas turbine engine. This apparatus includes a shroud, and the shroud includes a base and an abradable coating system. The base extends axially along and circumferentially about an axis. The abradable coating system is connected to the base along a radial inner side of the base. The abradable coating system includes a plurality of upstream protrusions, a plurality of downstream protrusions and an elastomeric material. The upstream protrusions are arranged circumferentially about the axis in an upstream array. Each of the upstream protrusions project radial inward away from the base inner side. Each of the upstream protrusions is configured from or otherwise includes an abradable material. The downstream protrusions are arranged circumferentially about the axis in a downstream array. Each of the downstream protrusions projects radial inward away from the base inner side. Each of the downstream protrusions is configured from or otherwise includes the abradable material. The elastomeric material extends circumferentially about the axis and axially between the upstream array and the downstream array.

According to still another aspect of the present invention, another apparatus is provided for a gas turbine engine. This apparatus includes a shroud, and the shroud includes a base and an abradable coating system. The base extends axially along and circumferentially about an axis. The abradable coating system is connected to the base along a radial inner side of the base. The abradable coating system includes a plurality of protrusions and a polymeric material extending around an exterior perimeter of each of the protrusions. The protrusions are arranged circumferentially about the axis in a circumferentially extending array. Each of the protrusions projects in a radial inward direction away from the base inner side to a distal inner end. Each of the protrusions is configured from or otherwise includes an abradable material.

In an embodiment of any of the above aspects, the elastomeric material may surround each of the upstream protrusions. In addition or alternatively, the elastomeric material may surround each of the downstream protrusions.

In an embodiment according to any of the previous embodiments, the protrusions may include a first protrusion. The elastomeric material may surround the first protrusion.

In an embodiment according to any of the previous embodiments, the protrusions may include a first protrusion. The shroud may extend radially between a shroud inner side and a shroud outer side. The shroud inner side may be collectively formed by the distal inner end of the first protrusion and the elastomeric material.

In an embodiment according to any of the previous embodiments, the protrusions may include a first protrusion and a second protrusion. The elastomeric material may extend laterally between and may be bonded to the first protrusion and the second protrusion.

In an embodiment according to any of the previous embodiments, the protrusions may include a first protrusion. The first protrusion may project radially from the base inner side to the distal inner end of the first protrusion. The elastomeric material may project radially to the base inner side along the first protrusion.

In an embodiment according to any of the previous embodiments, the protrusions may include a first protrusion. The first protrusion may have a lateral protrusion width at the base inner side. The gap formed by the first protrusion may have a lateral gap width at the base inner side that is equal to or greater than the lateral protrusion width.

In an embodiment according to any of the previous embodiments, the protrusions may include a first protrusion. The first protrusion may be configured as a pedestal.

In an embodiment according to any of the previous embodiments, the protrusions may include a first protrusion. The first protrusion may be configured as a rib.

In an embodiment according to any of the previous embodiments, the protrusions may include a first protrusion. The first protrusion may project along a span line in the radial inward direction away from the base inner side to the distal inner end of the first protrusion. The span line may be perpendicular to the base first side.

In an embodiment according to any of the previous embodiments, the protrusions may include a first protrusion. The first protrusion may project along a span line in the radial inward direction away from the base inner side to the distal inner end of the first protrusion. The span line may be angularly offset from the base first side by an included acute angle.

In an embodiment according to any of the previous embodiments, the protrusions may include a first protrusion. The first protrusion may have a lateral protrusion width. The lateral protrusion width may be uniform as at least a portion of the first protrusion projects radially in the radial inward direction away from the base inner side.

In an embodiment according to any of the previous embodiments, the protrusions may include a first protrusion. The first protrusion may have a lateral protrusion width. The lateral protrusion width may change as at least a portion of the first protrusion projects radially in the radial inward direction away from the base inner side.

In an embodiment according to any of the previous embodiments, the protrusions may include a first protrusion. The first protrusion may have a circular cross-sectional geometry.

In an embodiment according to any of the previous embodiments, the protrusions may include a first protrusion. The first protrusion may have an elongated cross-sectional geometry.

In an embodiment according to any of the previous embodiments, the protrusions may include a first protrusion. The first protrusion may have a polygonal cross-sectional geometry.

In an embodiment according to any of the previous embodiments, the protrusions may be a plurality of first protrusions. The abradable coating system may also include a plurality of second protrusions. The second protrusions may be arranged circumferentially about the axis in a second circumferentially extending array. Each of the second protrusions may project in the radial inward direction away from the base inner side to a second distal inner end. Each of the second protrusions may be configured from or otherwise include the abradable material. The elastomeric material may fill a second gap between each axially neighboring pair of one of the first protrusions and one of the second protrusions.

In an embodiment according to any of the previous embodiments, the apparatus may also include a bladed rotor rotatable about the axis. The bladed rotor may include a rotor base and a plurality of rotor blades arranged circumferentially around rotor base. The abradable coating system may form an outer peripheral boundary of a flowpath. Each of the rotor blades may project radially out from the rotor base into the flowpath towards the abradable coating system.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a rotor section for a gas turbine engine powerplant.
FIG. 2 is a partial schematic side sectional illustration of the rotor section.
FIG. 3 is a sectional illustration of a rotor blade along line 3-3 in FIG. 2.
FIG. 4 is a partial schematic side sectional illustration of a multi-material abradable shroud.
FIG. 5 is a partial schematic cross-sectional illustration of the abradable shroud.
FIG. 6 is a partial schematic plan view illustration of an inner side of the abradable shroud.
FIG. 6B is a partial schematic plan view illustration of the inner side of the abradable shroud with another pattern of protrusions.
FIG. 7 is a partial schematic side sectional illustration of the rotor section during a self-clearancing operation.
FIG. 8 is a partial schematic side sectional illustration of a shroud without support material during a self-clearancing operation.
FIG. 9 is a partial schematic cross-sectional illustration of the abradable shroud with canted protrusions.
FIGS. 10 and 11 are partial schematic cross-sectional illustrations of the abradable shroud with various protrusion arrangements.
FIGS. 12-15 are partial schematic plan view illustrations of an inner side of the abradable shroud with various protrusion arrangements.
FIGS. 16-18 are schematic illustrations of a protrusion with various cross-sectional geometries.
FIG. 19 is a partial schematic side sectional illustration of the rotor section, where the abradable shroud has a multi-member shroud base.
FIG. 20 is a partial schematic side sectional illustration of the abradable shroud of FIG. 19.

### DETAILED DESCRIPTION

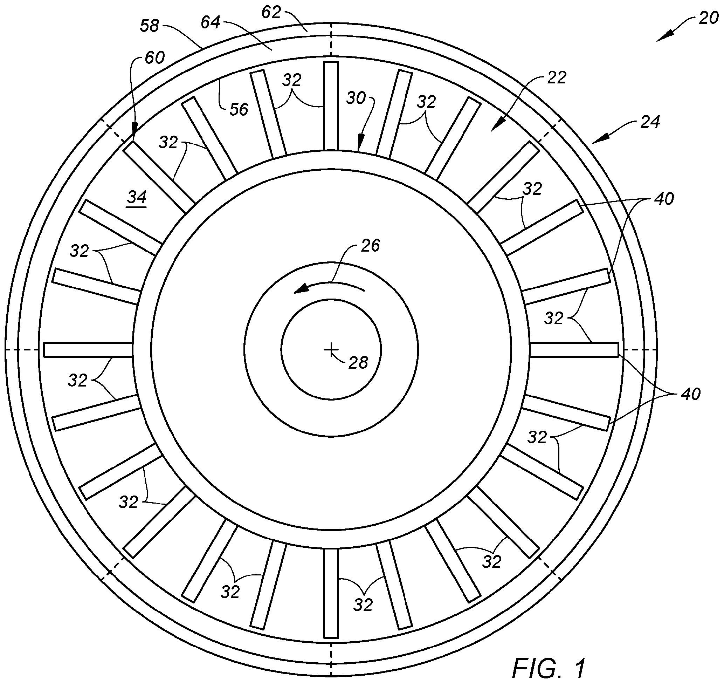

FIG. 1 schematically illustrates a rotor section 20 of a gas turbine engine powerplant for an aircraft. The aircraft may be an airplane, a helicopter, a drone (e.g., an unmanned aerial vehicle (UAV)) or any other manned or unmanned aerial vehicle or system. The powerplant may be configured as, or otherwise included as part of, a propulsion system for the aircraft. The powerplant, for example, may be a turbofan gas turbine engine, a turbojet gas turbine engine, a turboprop gas turbine engine or a turboshaft gas turbine engine. The powerplant may also or alternatively be configured as, or otherwise included as part of, an electrical power system for the aircraft. The powerplant, for example, may be an auxiliary power unit (APU) for the aircraft. The present disclosure, however, is not limited to such exemplary powerplants nor to aircraft applications. The powerplant, for example, may alternatively be an industrial gas turbine engine.

The rotor section 20 may be configured as, or otherwise included as part of, a compressor section of the powerplant; e.g., a low pressure compressor (LPC) section. The rotor section 20 may alternatively be configured as, or otherwise included as part of, a fan section of the powerplant. The present disclosure, however, is not limited to the foregoing exemplary rotor sections. The rotor section 20 of FIG. 1 includes a bladed rotor 22 (e.g., a compressor rotor or a fan rotor) and an abradable shroud 24 for the bladed rotor 22, which abradable shroud 24 may also be referred to as a blade outer air seal (BOAS).

The bladed rotor 22 is rotatable in a first circumferential direction 26 (e.g., a counterclockwise direction, or alternatively a clockwise direction) about an axis 28. This axis 28 may be a centerline axis of the rotor section 20 and its rotor section members 22 and 24. The bladed rotor 22 includes a rotor base 30 (e.g., a disk or a hub) and a plurality of rotor blades 32 (e.g., airfoils or vanes). The rotor blades 32 are arranged circumferentially about the rotor base 30 and the axis 28 in a multi-material annular (e.g., circular) blade array. The rotor blades 32 are connected to the rotor base 30. Each of the rotor blades 32, for example, may be formed integral with or mechanically fastened, welded, brazed and/or otherwise attached to the rotor base 30.

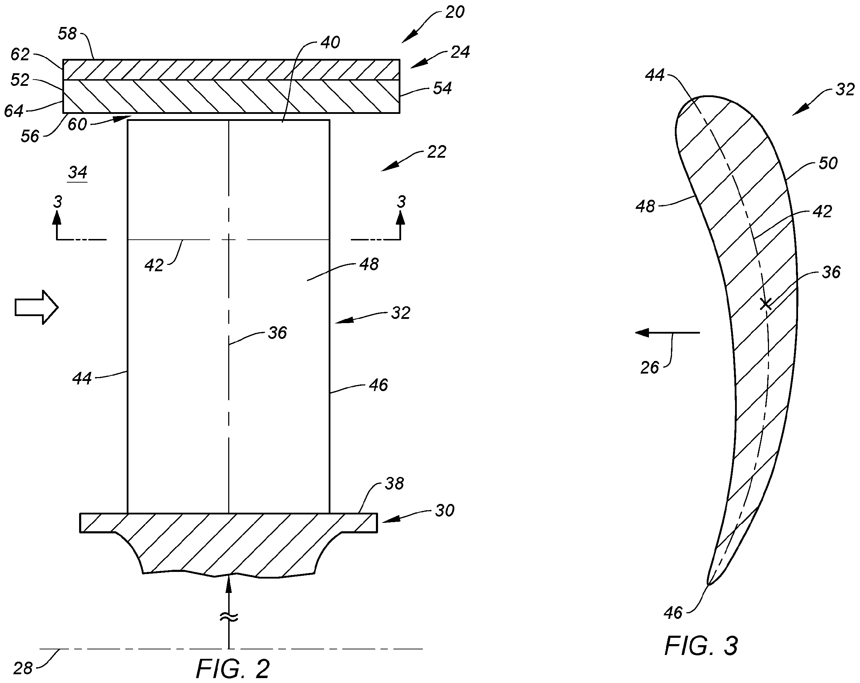

Referring to FIG. 2, each of the rotor blades 32 projects radially out from the rotor base 30 into and substantially radially across an annular flowpath 34 (see also FIG. 1) towards the abradable shroud 24, which flowpath 34 extends axially through the rotor section 20. More particularly, each of the rotor blades 32 projects spanwise along a span line 36 of the respective rotor blade 32 out from a platform 38 of the rotor base 30 to an unsupported distal tip 40 of the respective rotor blade 32. Each of the rotor blades 32 extends longitudinally along a camber line 42 of the respective rotor blade 32 from a leading edge 44 of the respective rotor blade 32 to a trailing edge 46 of the respective rotor blade 32. Referring to FIG. 3, each of the rotor blades 32 extends laterally (e.g., in a direction perpendicular to the camber line 42) between and to a first (e.g., concave, pressure) side 48 of the respective rotor blade 32 and a second (e.g., convex, suction) side 50 of the respective rotor blade 32. These opposing lateral rotor blade sides 48 and 50 extends longitudinally along the camber line 42 and meet at the leading edge 44 and the trailing edge 46. Referring to FIG. 2, the leading edge 44, the trailing edge 46, the blade first side 48 and the blade second side 50 (not visible in FIG. 2) each project spanwise / radially out from the base platform 38 to the respective blade tip 40.

The abradable shroud 24 extends axially along the axis 28 between and to an upstream end 52 of the abradable shroud 24 and a downstream end 54 of the abradable shroud 24. Referring to FIG. 1, the abradable shroud 24 extends circumferentially about (e.g., completely around) the axis 28 providing the abradable shroud 24 with, for example, a full-hoop tubular geometry. The abradable shroud 24 extends radially between and to a radial inner side 56 of the abradable shroud 24 and a radial outer side 58 of the abradable shroud 24. Referring to FIG. 2, the shroud inner side 56 is disposed radially outboard of, but radially next to, the bladed rotor 22 and its rotor blades 32. Each blade tip 40 of FIG. 2, for example, is disposed radially inboard of the abradable shroud 24 and its shroud inner side 56, and may be (e.g., slightly) radially separated from the abradable shroud 24 and its shroud inner side 56 by a radial blade tip clearance gap 60. With this arrangement, the abradable shroud 24 and its shroud inner side 56 form a radial outer peripheral boundary of a portion of the flowpath 34 which extends at least axially along the bladed rotor 22 and its rotor blades 32. In other words, the abradable shroud 24 and its shroud inner side 56 form the radial outer peripheral boundary of at least the portion of the flowpath 34 into which the rotor blades 32 are located.

Referring to FIG. 1, the abradable shroud 24 may be configured as a single, unitary body circumferentially about the axis 28. Alternatively, the abradable shroud 24 may include a plurality of arcuate shroud segments; see dashed lines. These shroud segments are arranged circumferentially end-to-end in an annular segment array to collectively form the abradable shroud 24 circumferentially about the axis 28.

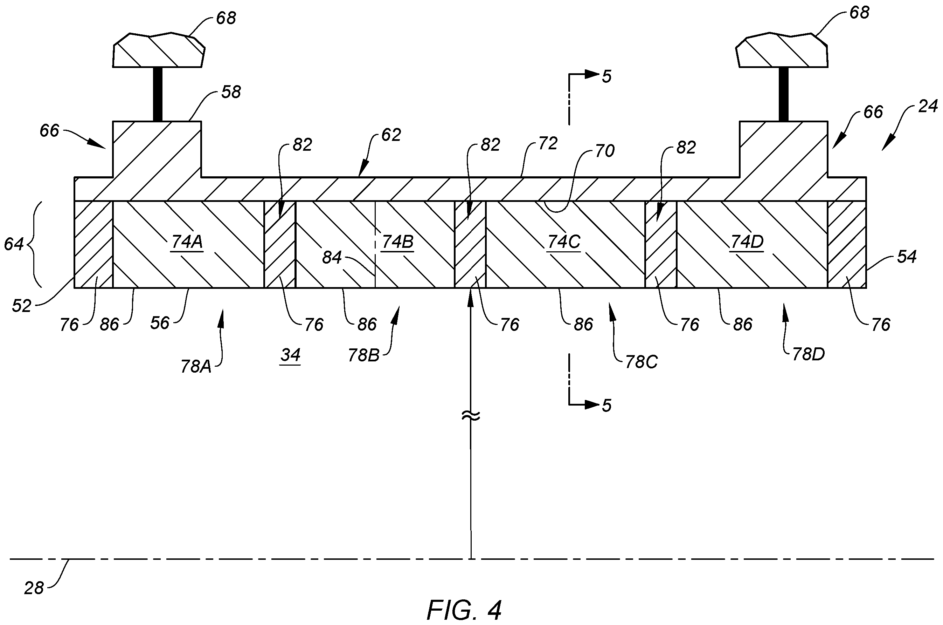

Referring to FIG. 4, the abradable shroud 24 includes a shroud base 62 (e.g., a backing plate, a support member, etc.) and a multi-material abradable coating system 64. The abradable shroud 24 of FIG. 4 also includes one or more shroud mounts 66 (schematically shown in FIG. 4). These shroud mounts 66 are arranged at the shroud outer side 58 and are connected to (e.g., formed integral with or otherwise attached to) the shroud base 62. The shroud mounts 66 are configured to attach the abradable shroud 24 to a stationary support structure 68 (e.g., a case, a frame) of the powerplant. Examples of the shroud mounts 66 include, but are not limited to, mounting hooks, mounting flanges, mounting rims, and the like.

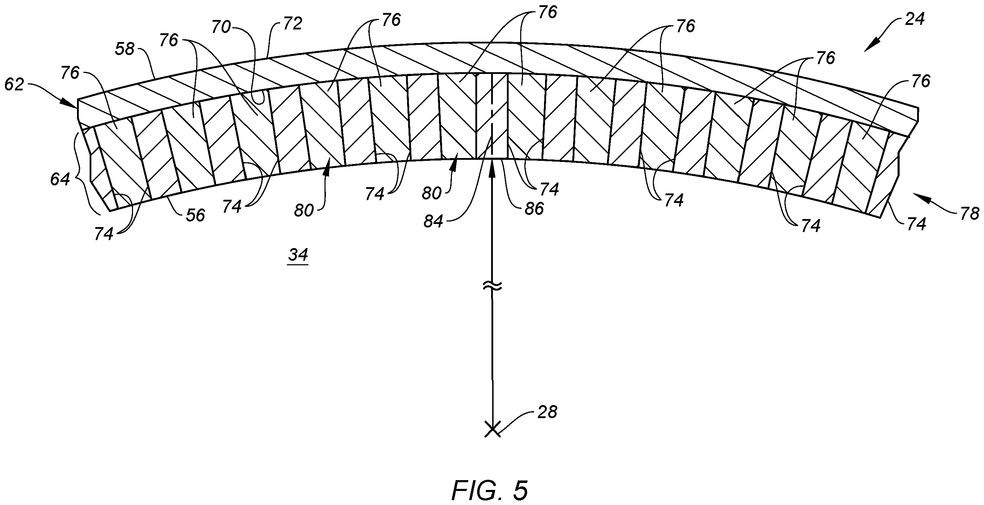

The shroud base 62 extends axially along the axis 28 between and to the shroud upstream end 52 and the shroud downstream end 54. The shroud base 62 extends radially between and to a radial inner side 70 of the shroud base 62 and a radial outer side 72 of the shroud base 62, where the shroud mounts 66 may be connected to the shroud base 62 at the base outer side 72. Referring to FIG. 5, the shroud base 62 extends circumferentially about the axis 28. More particularly, where the abradable shroud 24 is configured as the single, unitary body, the shroud base 62 may extend completely around the axis 28. Where the abradable shroud 24 is formed by the array of shroud segments, each shroud base 62 included in a respective one of the shroud segments may extend partially about the axis 28. This shroud base 62 is formed from a stiff, high strength and/or durable shroud base material such as metal or a polymer composite. Examples of the metal include, but are not limited to, an aluminum alloy, steel (e.g., stainless steel), a nickel (Ni) alloy, and a titanium (Ti) alloy. The polymer composite may include reinforcement material (e.g., carbon fibers) embedded within a polymer matrix. The polymer matrix may be a thermoset (e.g., epoxy) or a thermoplastic. Examples of the thermoplastic include, but are not limited to, polyetheretherketone (PEEK), polyetherketoneketone (PEKK), and polyaryletherketone (PAEK).

Referring to FIGS. 4 and 5, the coating system 64 is disposed at the base inner side 70 and forms the shroud inner side 56. The coating system 64 of FIGS. 4 and 5, for example, is connected (e.g., bonded) to the shroud base 62 at its base inner side 70, and the coating system 64 projects in a radial inward direction (e.g., towards the axis 28, away from the shroud base 62) to the shroud inner side 56. The coating system 64 may cover an entirety of (or alternatively one or more select portions of) the shroud base 62 and its base inner side 70. The coating system 64 of FIG. 4, for example, extends axially along the base inner side 70 between and to the shroud upstream end 52 and the shroud downstream end 54. The coating system 64 of FIG. 5 extends circumferentially along a circumferential length of the base inner side 70. For example, where the abradable shroud 24 is configured as the single, unitary body, the coating system 64 may extend completely around the axis 28. Where the abradable shroud 24 is formed by the array of shroud segments, the abradable coating of each shroud segment may extend circumferentially about the axis 28 between opposing circumferential sides of the respective shroud segment. The coating system 64 of FIGS. 4 and 5 includes a plurality of protrusions 74A-D (generally referred to as "74") and a support material 76.

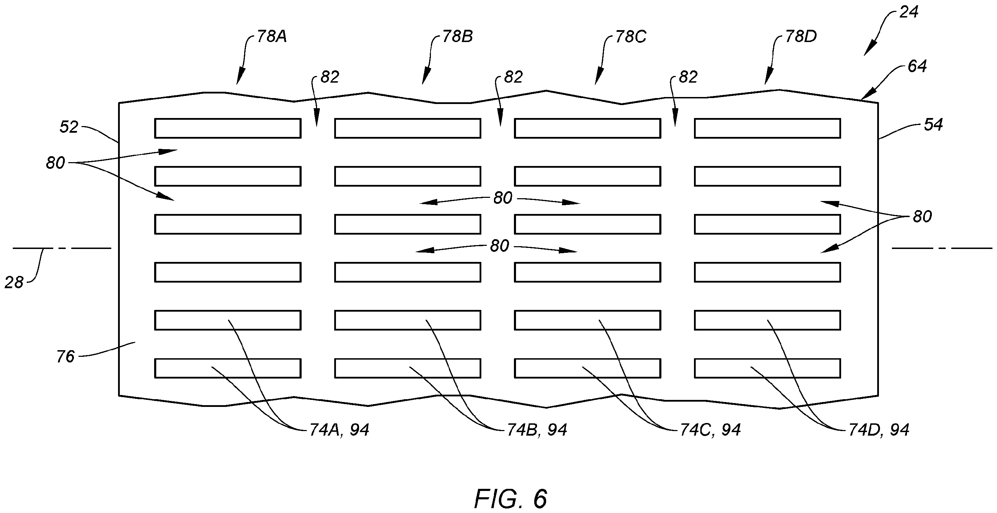

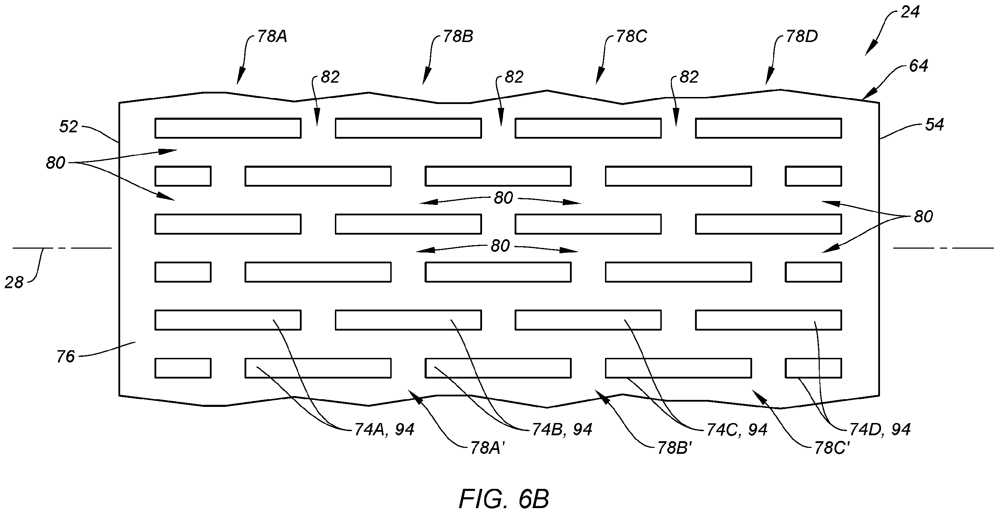

Referring to FIG. 6, the protrusions 74A-D are arranged into one or more circumferentially extending arrays 78A-D (generally referred to as "78"); e.g., annular arrays, arcuate arrays, etc. Within each of these protrusion arrays 78, the respective protrusions 74 are arranged side-by-side circumferentially about the axis 28 and may be (e.g., completely) axially aligned along the axis 28. Each circumferentially neighboring (e.g., adjacent) pair of the protrusions 74 within each protrusion array 78 are circumferentially spaced apart by a circumferential gap 80; e.g., channel, slot, etc. This circumferential gap 80 extends circumferentially between and is formed by the respective circumferentially neighboring pair of the protrusions 74.

Each axially neighboring pair of the protrusion arrays 78 are axially spaced apart by an axial distance. With this arrangement, circumferentially aligned (or overlapping) protrusions 74 in each axially neighboring pair of the protrusion arrays 78 are axially spaced apart by a respective axial gap 82; e.g., channel, slot, etc. For example, each pair of circumferentially aligned (or overlapping) protrusions 74A and 74B are axially spaced apart by the respective axial gap 82. Each pair of circumferentially aligned (or overlapping) protrusions 74B and 74C are axially spaced apart by the respective axial gap 82. Each pair of circumferentially aligned (or overlapping) protrusions 74C and 74D are axially spaced apart by the respective axial gap 82.

Referring to FIGS. 4 and 5, each of the protrusions 74 is connected to (e.g., bonded to) the shroud base 62. Each of the protrusions 74 may project radially inward from the shroud base 62 to the shroud inner side 56. More particularly, each of the protrusions 74 of FIGS. 4 and 5 projects spanwise along a span line 84 (e.g., a radially extending centerline) of the respective protrusion 74 out from the base inner side 70 to a distal inner end 86 of the respective protrusion 74, which protrusion inner end 86 is disposed at and partially forms the shroud inner side 56. Each of the protrusions 74 is formed from a stiff and/or erosion resistant abradable material such as a polymer resin; e.g., thermoset material or thermoplastic material. In some embodiments, the abradable material may also include an additive within the polymer resin to improve abradability and/or lower stiffness; e.g., to reduce rub forces.

The support material 76 is configured to structurally support the protrusions 74. The support material 76 of FIG. 4, for example, completely (or alternatively partially) fills each of the axial gaps 82 between axially neighboring protrusions 74. More particularly, the support material 76 of FIG. 4 extends axially between and may be connected to (e.g., bonded to) each axially neighboring pair of the protrusions 74. Similarly, the support material 76 of FIG. 5 completely (or alternatively partially) fills each of the circumferential gaps 80 between circumferentially neighboring protrusions 74. More particularly, the support material 76 of FIG. 5 extends circumferentially between and may be connected to (e.g., bonded to) each circumferentially neighboring pair of the protrusions 74. With this arrangement, referring to FIG. 6, the support material 76 may completely (or alternatively partially) surround one or more or all of the protrusions 74. The support material 76 of FIG. 6, for example, extends around an exterior perimeter of (e.g., a circumference of) each of the protrusions 74. The protrusions 74 may thereby be circumferentially and/or axially embedded within a matrix of the support material 76.

Referring to FIGS. 4 and 5, the support material 76 is connected to (e.g., bonded to) the shroud base 62, and may partially form the shroud inner side 56. The support material 76 of FIGS. 4 and 5, for example, projects radially inward from the base inner side 70, along sides of the protrusions 74, to (or alternatively partially towards) the shroud inner side 56. With this arrangement, at least (or only) the support material 76 and the protrusion inner ends 86 may collectively form the shroud inner side 56. The support material 76 may be a polymeric material such as an elastomeric material, which is different than the abradable material. Examples of the elastomeric material include, but are not limited to, nitrile rubber, butyl rubber, polyurethane, polyisoprene, butadiene, synthetic rubber, styrene-butadiene, neoprene, polybutadiene, fluoroelastomer, ethylene propylene rubber, natural rubber, ethylene-propylene diene monomer (EPDM), silicon rubber, chloroprene, isoprene, and perfluoroelastomer such as FFKM.

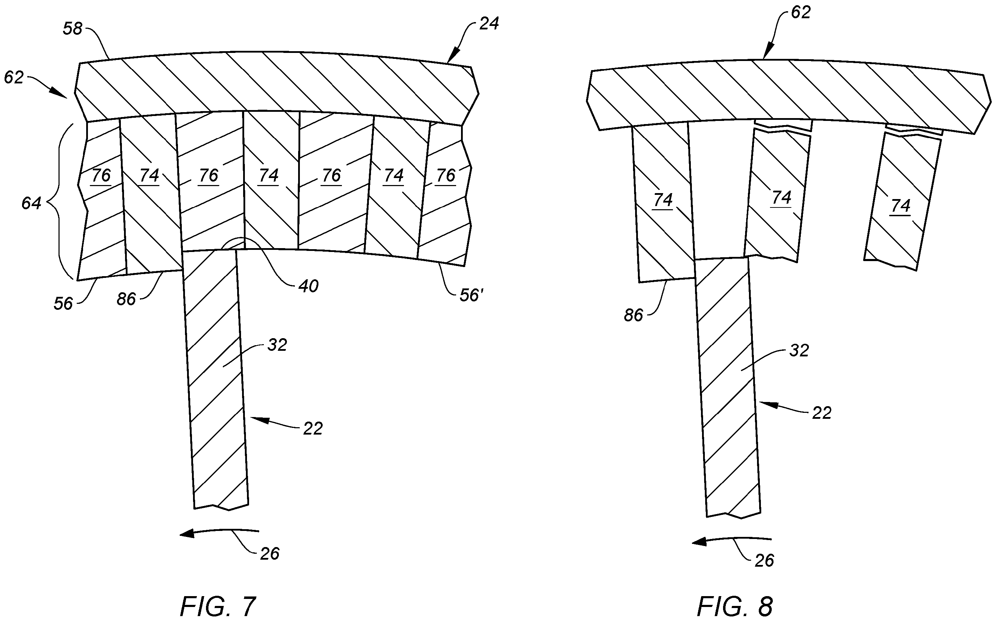

During rotor section operation, referring to FIG. 7, the bladed rotor 22 may self-clearance within the abradable shroud 24 by rubbing away a portion of the coating system 64 at the shroud inner side 56. During this rubbing, one or more of the rotor blades 32 (one visible in FIG. 7) contacts the coating system 64 and one or more of its protrusions 74. As the rotor blade 32 of FIG. 7 contacts a respective one of the protrusions 74, the rotor blade 32 exerts a lateral (e.g., circumferential or tangential) force against the respective protrusion 74 at its protrusion inner end 86 and may thereby subject the respective protrusion 74 to a relatively large moment. A portion of the support material 76 circumferentially adjacent (and rotationally behind) the respective protrusion 74 provides a support structure to at least partially reduce the load on the respective protrusion 74. The rotor blade 32 of FIG. 7 may thereby break off an end portion of the respective protrusion 74 as well as remove a corresponding portion of the support material 76. The radial clearance between the blade tips 40 and the 1 Clearance shroud inner side 54' may thereby be relatively small. By contrast, if the abradable shroud 24 was configured without the support material 76 as shown in FIG. 8 for example, the moment imparted on the respective protrusion 74 may cause that protrusion 74 to also break off and/or otherwise fracture at its base; e.g., at or about the base inner side 70. The radial clearance between the blade tips 40 and the 1 Clearance shroud inner side may thereby be relatively large.

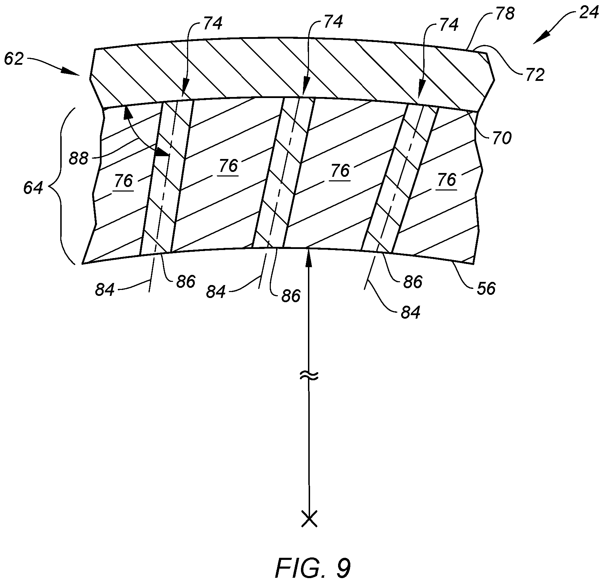

In some embodiments, referring to FIG. 5, each protrusion 74 and its protrusion span line 84 may be arranged perpendicular to the shroud base 62 and its base inner side 70 at a location of that protrusion 74. In other embodiments, referring to FIG. 9, each protrusion 74 and its protrusion span line 84 may be angularly offset from the shroud base 62 and its base inner side 70 at a location of that protrusion 74 by an offset angle 88. This offset angle 88 is a non-zero acute angle greater than, for example, forty-five degrees (45°), sixty degrees (60°) or seventy-five degrees (75°). Here, the protrusions 74 are canted in a direction with the first circumferential direction 26 of the rotation of the bladed rotor 22 about the axis 28. The protrusion inner end 86 of each protrusion 74 of FIG. 9, for example, is circumferentially offset in the first circumferential direction 26 from a base of that respective protrusion 74. With this arrangement, the blade loading against the protrusions 74 may be reduced during rotor tip rub.

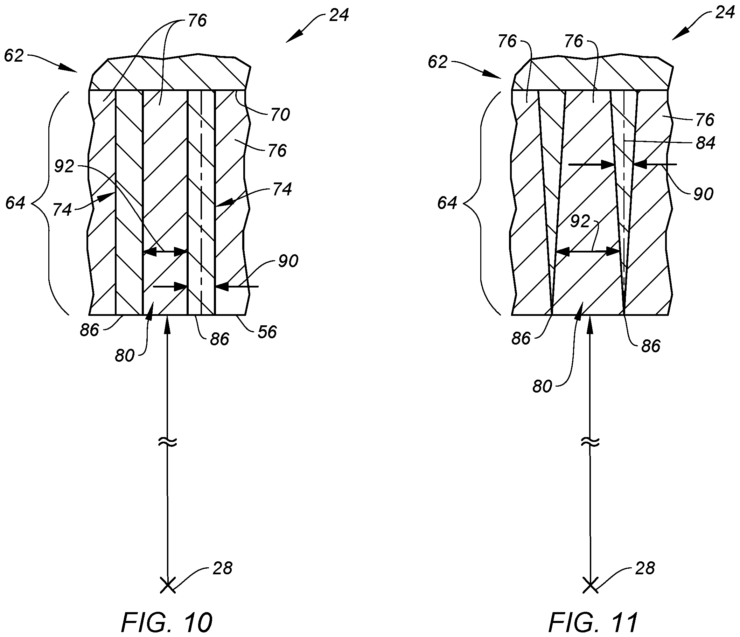

Referring to FIGS. 10 and 11, each of the protrusions 74 has a lateral protrusion width 90; e.g., a width between opposing circumferential sides of the respective protrusion 74. In some embodiments, referring to FIG. 10, the lateral protrusion width 90 may be uniform (e.g., constant) as at least a portion or an entirety of the respective protrusion 74 projects in the radial inward direction; e.g., from the base inner side 70 to the protrusion inner end 86. In other embodiments, referring to FIG. 11, the lateral protrusion width 90 may change (e.g., decrease) as at least a portion or an entirety of the respective protrusion 74 projects in the radial inward direction; e.g., from the base inner side 70 to the protrusion inner end 86. Each protrusion 74 of FIG. 11, in particular, has a laterally tapered geometry.

Referring to FIGS. 10 and 11, each circumferential gap 80 has a lateral gap width 92; e.g., a width between a respective circumferentially neighboring pair of the protrusions 74. This lateral gap width 92 at or near the base inner side 70 may be equal to or greater than the lateral protrusion width 90 of one or both of the protrusions 74 forming that respective circumferential gap 80 at or near the base inner side 70. However, it is contemplated the lateral gap width 92 may alternatively be smaller than the lateral protrusion width 90 in other embodiments depending on, for example, a density requirement for the support material 76.

In some embodiments, referring to FIG. 6, the respective protrusions 74 in each protrusion array 78 may be (e.g., completely) axially aligned along the axis 28. For example, an axial center and/or an axial end of each protrusion 74 in the respective protrusion array 78 may be located on a common reference plane perpendicular to the axis 28. Alternatively, the respective protrusions 74 in each protrusion array 78 may be slightly axially offset along the axis 28. In other embodiments, two or more of the protrusion arrays 78 may axially overlap one another as shown, for example, in FIG. 6B. For example, the protrusions 74 in the protrusion array 78A' axially overlap the protrusions 74 in the protrusion arrays 78A and 78B. The protrusions 74 in the protrusion array 78B' axially overlap the protrusions 74 in the protrusion arrays 78B and 78C. The protrusions 74 in the protrusion array 78C' axially overlap the protrusions 74 in the protrusion arrays 78C and 78D.

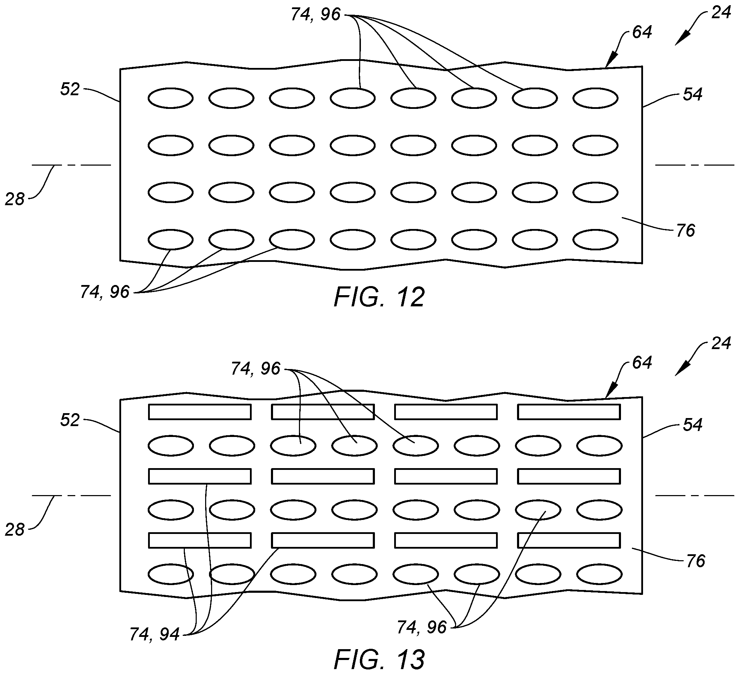

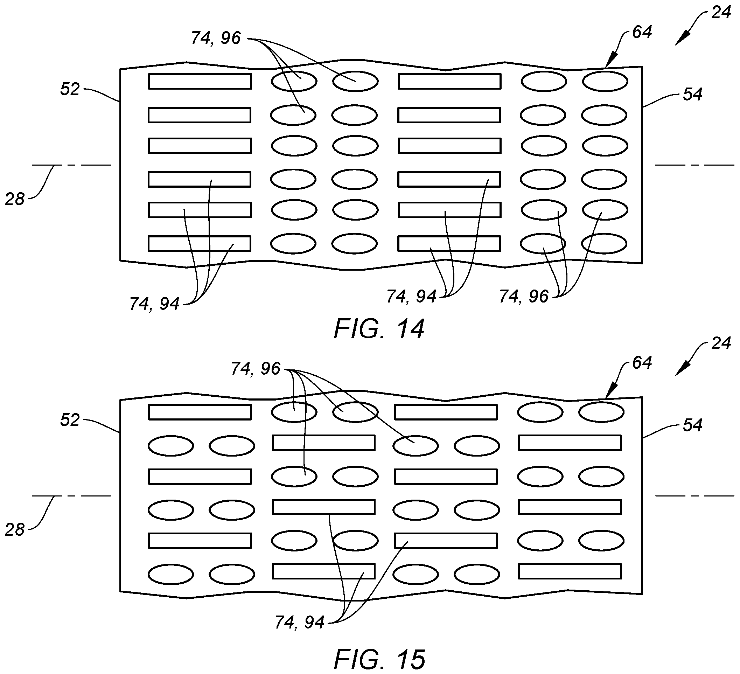

In some embodiments, referring to FIG. 6, one or more or all of the protrusions 74 may each be configured as a rib 94; e.g., an axially elongated member. In other embodiments, referring to FIGS. 12-15, one or more of all of the protrusions 74 may alternatively each be configured as a pedestal 96.

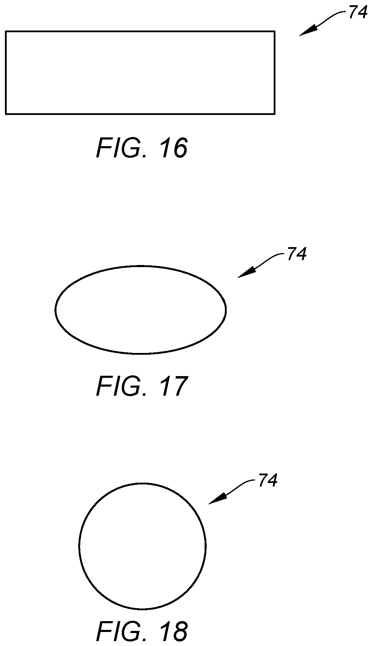

In some embodiments, referring to FIGS. 16 and 17, one or more or all of the protrusions 74 may each have an elongated cross-sectional geometry. Examples of this elongated geometry include, but are not limited to, a rectangular cross-sectional geometry (see FIG. 16) and an oval cross-sectional geometry (see FIG. 17), a racetrack shaped cross-sectional geometry, or the like.

In some embodiments, referring to FIG. 16, one or more or all of the protrusions 74 may each have a polygonal cross-sectional geometry. Examples of this polygonal geometry include, but are not limited to, a rectangular cross-sectional geometry (see FIG. 16), a square cross-sectional geometry, a triangular cross-sectional geometry, a trapezoidal cross-sectional geometry, a parallelogram cross-sectional geometry, or the like.

In some embodiments, referring to FIG. 18, one or more or all of the protrusions 74 may each have a circular cross-sectional geometry.

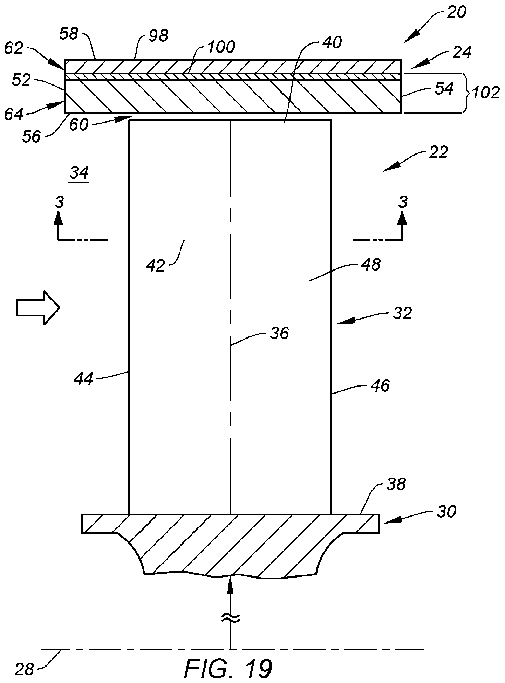

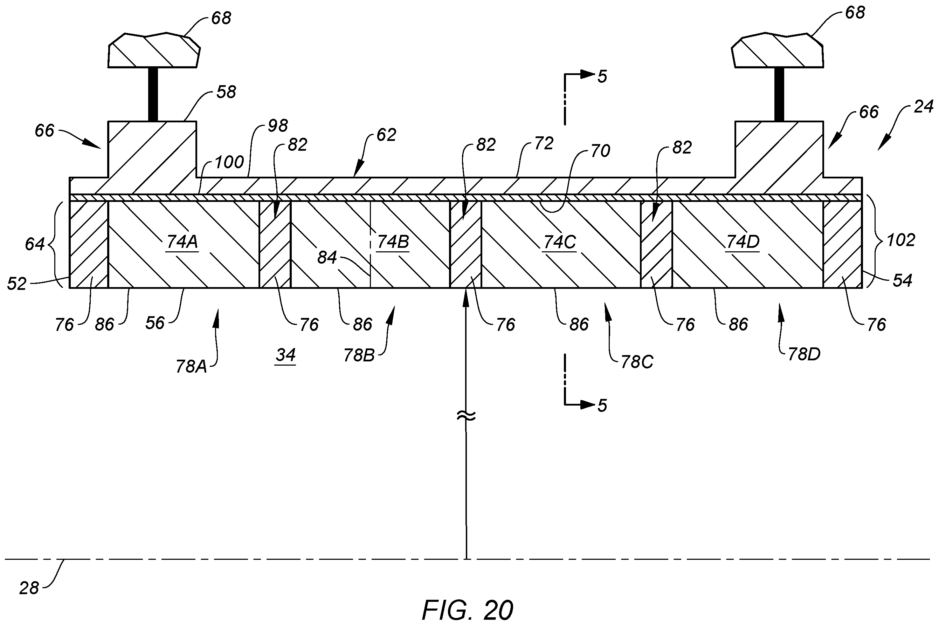

For ease of description, the shroud base 62 is generally described above as a monolithic body; e.g., see FIGS. 2 and 4. The shroud base 62, for example, may be formed as a single unitary body from the shroud base material. It is contemplated, however, the shroud base 62 may alternatively be formed from different members which are connected (e.g., bonded) together to collectively form the shroud base 62. For example, referring to FIGS. 19 and 20, shroud base 62 includes a base substrate 98 and a coating system backing 100. Here, the coating system backing 100 is a thin sheet of material which forms the base inner side 70. With such an arrangement, the coating system 64 and its members 76 and 78 may be bonded to / formed on the coating system backing 100 to provide an abrasion module 102; e.g., a cartridge. This abrasion module 102 and its coating system backing 100 may then be bonded and/or otherwise connected to the base substrate 98 to provide the abradable shroud 24.

The abradable shroud 24 and its coating system 64 may be formed using various manufacturing techniques. The coating system 64, for example, may be formed (e.g., printed) onto the shroud base 62 using additive manufacturing techniques. The present disclosure, however, is not limited to any particular manufacturing techniques.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for a gas turbine engine, comprising:
a shroud (24) including a base (62) and an abradable coating system (64);
the base (62) extending axially along and circumferentially about an axis (28), the base (62) extending radially between a base inner side (70) and a base outer side (72);
the abradable coating system (64) bonded to and covering the base (62) at the base inner side (70), and the abradable coating system (64) including a plurality of protrusions (74) and an elastomeric material (76);
the plurality of protrusions (74) arranged circumferentially about the axis (28) in a circumferentially extending array (78), each of the plurality of protrusions (74) projecting in a radial inward direction away from the base inner side (70) to a distal inner end (86), and each of the plurality of protrusions (74) comprising an abradable material; and
the elastomeric material (76) filling a gap (80) between each circumferentially neighboring pair of the plurality of protrusions (74).

2. The apparatus of claim 1, wherein the plurality of protrusions (74) comprise a first protrusion (74), and the elastomeric material (76) surrounds the first protrusion (74).

3. The apparatus of claim 1 or 2, wherein the shroud (24) extends radially between a shroud inner side (56) and a shroud outer side (58), and the shroud inner side (56) is collectively formed by the distal inner end (86) of a or the first protrusion (74) of the plurality of protrusions (74), and the elastomeric material (76).

4. The apparatus of claim 1, 2 or 3, wherein the plurality of protrusions (74) include a or the first protrusion (74) and a second protrusion (74), and the elastomeric material (76) extends laterally between and is bonded to the first protrusion (74) and the second protrusion (74).

5. The apparatus of any preceding claim, wherein a or the first protrusion (74) of the plurality of protrusions (74) projects radially from the base inner side (70) to the distal inner end (86) of the first protrusion (74), and the elastomeric material (76) projects radially to the base inner side (70) along the first protrusion (74).

6. The apparatus of any preceding claim, wherein a or the first protrusion (74) of the plurality of protrusions (74) has a lateral protrusion width (90) at the base inner side (70), and the gap (80) formed by the first protrusion (74) has a lateral gap width (92) at the base inner side (70) that is equal to or greater than the lateral protrusion width (90).

7. The apparatus of any preceding claim, wherein a or the first protrusion (74) of the plurality of protrusions (74) is configured as a pedestal (96).

8. The apparatus of any of claims 1 to 6, wherein a or the first protrusion (74) of the plurality of protrusions (74) is configured as a rib (94).

9. The apparatus of any preceding claim, wherein a or the first protrusion (74) of the plurality of protrusions (74) projects along a span line (84) in the radial inward direction away from the base inner side (70) to the distal inner end (86) of the first protrusion (74), and the span line (84) is perpendicular to the base inner side (70) and/or is angularly offset from the base inner side (70) by an included acute angle (88).

10. The apparatus of any preceding claim, wherein a or the first protrusion (74) of the plurality of protrusions (74) has a or the lateral protrusion width (90), and the lateral protrusion width (90) is uniform as at least a portion of the first protrusion (74) projects radially in the radial inward direction away from the base inner side (70).

11. The apparatus of any of claims 1 to 9, wherein a or the first protrusion (74) of the plurality of protrusions (74) has a or the lateral protrusion width (90), and the lateral protrusion width (90) changes as at least a portion of the first protrusion (74) projects radially in the radial inward direction away from the base inner side (70).

12. The apparatus of claim, wherein a or the first protrusion (74) of the plurality of protrusions (74) has a circular cross-sectional geometry, an elongated cross-sectional geometry, or a polygonal cross-sectional geometry.

13. The apparatus of any preceding claim, wherein:
the plurality of protrusions (74) are a plurality of first protrusions (74), and the abradable coating system (64) further includes a plurality of second protrusions (74);
the plurality of second protrusions (74) are arranged circumferentially about the axis (28) in a second circumferentially extending array (78), each of the plurality of second protrusions (74) projects in the radial inward direction away from the base inner side (70) to a second distal inner end (86), and each of the plurality of second protrusions (74) comprises the abradable material; and
the elastomeric material (76) fills a second gap (82) between each axially neighboring pair of one of the plurality of first protrusions (74) and one of the plurality of second protrusions (74).

14. The apparatus of any preceding claim, further comprising:
a bladed rotor (22) rotatable about the axis (28), the bladed rotor (22) including a rotor base (30) and a plurality of rotor blades (32) arranged circumferentially around rotor base (30);
the abradable coating system (64) forming an outer peripheral boundary of a flowpath (34); and
each of the plurality of rotor blades (32) projecting radially out from the rotor base (30) into the flowpath (34) towards the abradable coating system (64).

15. The apparatus of any preceding claim, wherein the plurality of protrusions (74) comprises:
a plurality of upstream protrusions (74A) arranged circumferentially about the axis (28) in an upstream array (78A), each of the plurality of upstream protrusions (74A) projecting radially inward away from the base inner side (70), and each of the plurality of upstream protrusions (74A) comprising the abradable material; and
a plurality of downstream protrusions (74B) arranged circumferentially about the axis (28) in a downstream array (78B), each of the plurality of downstream protrusions (74B) projecting radially inward away from the base inner side (70), and each of the plurality of downstream protrusions (74B) comprising the abradable material; and
the elastomeric material (76) extending circumferentially about the axis (28) and axially between the upstream array (78A) and the downstream array (78B), optionally wherein the elastomeric material (76) surrounds each of the plurality of upstream protrusions (74A) and/or the elastomeric material (76) surrounds each of the plurality of downstream protrusions (74B).
